# EUROPÄISCHE PATENTSCHRIFT

(11) **EP 2 850 314 B1**
(45) Veröffentlichungstag und Bekanntmachung des Hinweises auf die Patenterteilung: **20.04.2016**
(21) Anmeldenummer: 13718323.2
(22) Anmeldetag: 22.04.2013
(51) Int. Cl.: F02M 37/00, F02M 63/00, F16K 17/04, F16K 17/08, F16K 15/02, F16K 17/06, G05D 7/01

(54) **DRUCKBEGRENZUNGSVENTIL**
PRESSURE-LIMITING VALVE
SOUPAPE DE LIMITATION DE PRESSION

(30) Priorität: 16.05.2012 DE 102012104286
(43) Veröffentlichungstag der Anmeldung: 25.03.2015
(73) Patentinhaber: Voss Automotive GmbH, 51688 Wipperfürth (DE)
(72) Erfinder: ERB, Ulrich, 51145 Köln-Porz (DE)
(74) Vertreter: Patentanwälte Dr. Solf & Zapf
(86) Internationale Anmeldenummer: PCT/EP2013/058258
(87) Internationale Veröffentlichungsnummer: WO 2013/171028

(56) Entgegenhaltungen:
- EP-A1- 0 466 081
- EP-A2- 2 055 929
- US-A- 2 594 626

## Beschreibung

Die vorliegende Erfindung betrifft ein Druckbegrenzungsventil, insbesondere zur Anordnung in einer Rücklaufleitung eines Common-Rail-Systems eines Verbrennungsmotors, mit einem Ventilgehäuse, welches einen Gehäusekopf und einen hohlzylindrischen Gehäusemantel aufweist, in dem sich in einem Ventilfuß des Ventilgehäuses eine axiale Einlassöffnung und axial beabstandet von der Einlassöffnung mindestens eine radiale Auslassöffnung befinden, wobei sich im Ventilfuß an die Einlassöffnung ein innerer Ventilsitz für einen Ventilkörper anschließt, und wobei zwischen dem Ventilkörper und einer Schließfeder, die gegen einen an der Einlassöffnung wirkenden Druck eine Schließkraft erzeugt, ein axial beweglicher Ventilkolbens angeordnet ist.

Derartige Druckbegrenzungsventile werden in Kraftstoff-Rücklaufleitungen von sogenannten Common-Rail-Einspritzsystemen von Verbrennungsmotoren eingesetzt. Bei der Common-Rail-Einspritzung - auch Speichereinspritzung genannt - bringt eine Hochdruckpumpe den Kraftstoff auf ein hohes Druckniveau. Der unter Druck stehende Kraftstoff füllt ein Rohrleitungssystem, den Speicher, welcher bei Motorbetrieb ständig unter Druck steht. Das System weist eine gemeinsame Druckleitung, die sogenannte Rail, für mehrere Injektoren auf. Über die Druckleitung wird Kraftstoff mit hohem Druck zugeführt und über die Injektoren in den Verbrennungsmotor dosiert eingespritzt. Die Leistung der Hochdruckpumpe ist dabei so ausgelegt, dass zu jeder Zeit und in jedem Betriebszustand mehr Kraftstoff gefördert werden kann, als der Motor benötigt. Der jeweils nicht eingespritzte Kraftstoff wird über die Rücklaufleitung in eine Saugleitung der Kraftstoff-Pumpe bzw. in den Tank zurückgeführt. Dabei ist es in aller Regel erforderlich, einen bestimmten, im Bereich bis zu etwa 10 bar liegenden Mindestdruck im Niederdruckbereich der Injektoren aufrechtzuerhalten. Dazu kann in den Rücklauf ein Druckbegrenzungsventil der oben beschriebenen Art, das häufig auch Druckhalteventil genannt wird, wie es in ähnlicher Form aus der DE 43 11 856 A1 bekannt ist, eingesetzt werden. Dieses Ventil erfüllt die beschriebene Aufgabe, den Druck des Kraftstoffes auf einem definierten Wert zu halten bzw. auf diesen definierten Wert zu begrenzern.

Es hat sich im praktischen Einsatz, insbesondere bei einem Ventil mit einem kugelförmigen Ventilkörper, wie er in der DE 43 11 856 A1 beschrieben ist, gezeigt, dass es unter bestimmten Betriebsbedingungen zu Beschädigungen oder gar zu Totalausfällen des Druckbegrenzungsventils kommen kann.

US 2 594 626 zeigt ein Druckregelventil, das einen Ventilkörper aufweist, der als stufenkolben ausgebildet ist.

Der vorliegenden Erfindung liegt die Aufgabe zugrunde, ein Druckbegrenzungsventil der beschriebenen, gattungsgemäßen Art hinsichtlich seiner Einsatzsicherheit zu verbessern und dadurch Schäden oder gar Totalausfälle zu vermeiden.

Erfindungsgemäß wird dies dadurch erreicht, dass der Ventilkörper als Stufenkolben ausgebildet ist, der in seiner ersten Stufe auf seiner der Einlassöffnung zugewandten Seite eine erste, in axialer Richtung mit dem Druck beaufschlagbare Fläche sowie eine erste axiale Länge aufweist, über die er in einer Schließstellung mit seiner Außenfläche einen umfangsgemäß verlaufenden ersten, eine erste Spaltweite aufweisenden Drosselspalt mit einer Innenfläche des Ventilsitzes ausbildet, und der in seiner zweiten Stufe eine zweite, in axialer Richtung mit dem Druck beaufschlagbare Fläche aufweist, die zusammen mit der ersten Fläche eine Gesamtdruckfläche bildet, wobei in der zweiten Stufe über eine zweite axiale Länge hinweg zwischen der Außenfläche des Stufenkolbens und einer Innenfläche des Gehäusemäntels ein zweiter umfangsgemäß verlaufender Drosselspalt mit einer zweiten Spaltweite ausgebildet ist.

Durch die beiden Drosselspalte wird bei dem erfindungsgemäßen Druckbegrenzungsventil eine hydraulische Dämpfung der Bewegung des Ventilkolbens in Ventil-Schließrichtung bewirkt. Dabei beruht die erfindungsgemäße Ausgestaltung des Druckbegrenzungsventils auf der Erkenntnis, dass die bei bekannten Ventilen festgestellten Schäden auf schlagartige Bewegungen des beispielsweise bekanntermaßen kugelförmigen Ventilkörpers - bedingt durch Anregungen im Einspritztakt des Verbrennungsmotors - zurückzuführen sind, und zwar insbesondere auf schnelle und schlagartige Schließbewegungen. Diese schlagartigen Bewegungen werden durch die Erfindung effektiv gedämpft, indem vor allem der federbelastete Ventilkolben bei seiner Schließbewegung durch den hydraulischen Widerstand gebremst wird, der sich summarisch aus einem hydraulischen Teilwiderstand des ersten Drosselspaltes und aus einem hydraulischen Teilwiderstand des zweiten Drosselspaltes zusammensetzt.

Mit dem erfindungsgemäßen Druckbegrenzungsventil kann dabei vorteilhafterweise nicht nur eine Dämpfung der axialen Bewegung erreicht, sondern - im Gegensatz zu Ventilen mit einem kugelförmigen Ventilkörper - auch eine Bewegung des Ventilkörpers in radialer Richtung unterbunden werden, welche insbesondere bei Druckschwankungen schädigend wirkt.

Neben einer Robustheit gegen Druckpulsationen und einer geringen Schadensanfälligkeit gegenüber Schwankungen in einem das Ventil durchsetzendem Volumenstrom weist das erfindungsgemäße Ventil vorteilhafterweise darüber hinaus durch die engen Drosselspalte eine hohe Verschmutzungsresistenz und durch die unterschiedlichen Druckflächen sowie eine mögliche Variation des hydraulischen Gesamtwiderstandes bei der Drosselung - mittels einer flexiblen absoluten Dimensionierung der hydraulischen Teilwiderstände der beiden Drosselspalte sowie mittels einer optimierbaren Abstimmung des Verhältnisses der hydraulischen Teilwiderstände zueinander - ein mehrstufiges und an unterschiedliche Einsatzfälle leicht adaptierbares Regelverhalten auf.

So kann insbesondere in einer ersten Betriebsstufe, in der beide Drosselspalte und die kleinere Druckfläche der ersten Stufe des Ventilkörpers wirksam sind, bei minimaler Durchflussmenge ein schneller Druckanstieg und in einer zweiten Betriebsstufe, in der zwischen dem Ventilkörper und dem Gehäusemantel ein sich stetig vergrößernder Strömungskanal freigegeben wird und die größere Gesamtdruckfläche wirksam wird, mit zunehmender Durchflussmenge ein langsamerer Druckanstieg erzielt werden. Dies ist darauf zurückzuführen, dass sich durch die in den beiden Betriebsstufen unterschiedlich großen druckbeaufschlagten Flächen sich in den Betriebsstufen mit Vorteil unterschiedlich große, der Schließkraft der Schließfeder entgegenwirkende Druckkräfte ergeben.

Weitere vorteilhafte Ausgestaltungsmerkmale der Erfindung sind in den Unteransprüchen sowie der folgenden Beschreibung enthalten.

Anhand von bevorzugten, durch die Zeichnung veranschaulichten Ausführungsbeispielen soll die Erfindung genauer erläutert werden. Dabei zeigen:
- Fig. 1: ein erfindungsgemäßes Druckbegrenzungsventil im Axialschnitt in der Schließstellung,
- Fig. 2: eine perspektivische Ansicht eines erfindungsgemäßen Druckbegrenzungsventils in kleinerem Maßstab als in Fig. 1,
- Fig. 3 bis 5: das erfindungsgemäße Ventil gemäß Fig. 1, jedoch vergrößert und ohne seinen Gehäusekopf in einer ersten, zweiten und dritten, jeweils durch einen an der Einlassöffnung wirkenden Druck bewirkten Öffnungsstellung,
- Fig. 6: eine exemplarische diagrammatische Darstellung des durch die Abhängigkeit einer Durchflussmenge durch das Ventil vom an der Einlassöffnung wirkenden Druck charakterisierten Regelverhaltens zweier Ausführungen erfindungsgemäßer Druckbegrenzungsventile im Vergleich,
- Fig. 7: eine weitere Ausführung eines erfindungsgemäßen Druckbegrenzungsventils im Axialschhitt in der Schließstellung.

Zu der anschließenden Beschreibung wird ausdrücklich betont, dass die Erfindung nicht auf die Ausführungsbeispiele und dabei auch nicht auf alle oder mehrere Merkmale von beschriebenen Merkmalskombinationen beschränkt ist, vielmehr kann jedes einzelne Teilmerkmal jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

In den verschiedenen Figuren der Zeichnung sind gleiche Teile stets mit den gleichen Bezugszeichen versehen und werden daher in der Regel jeweils nur einmal beschrieben.

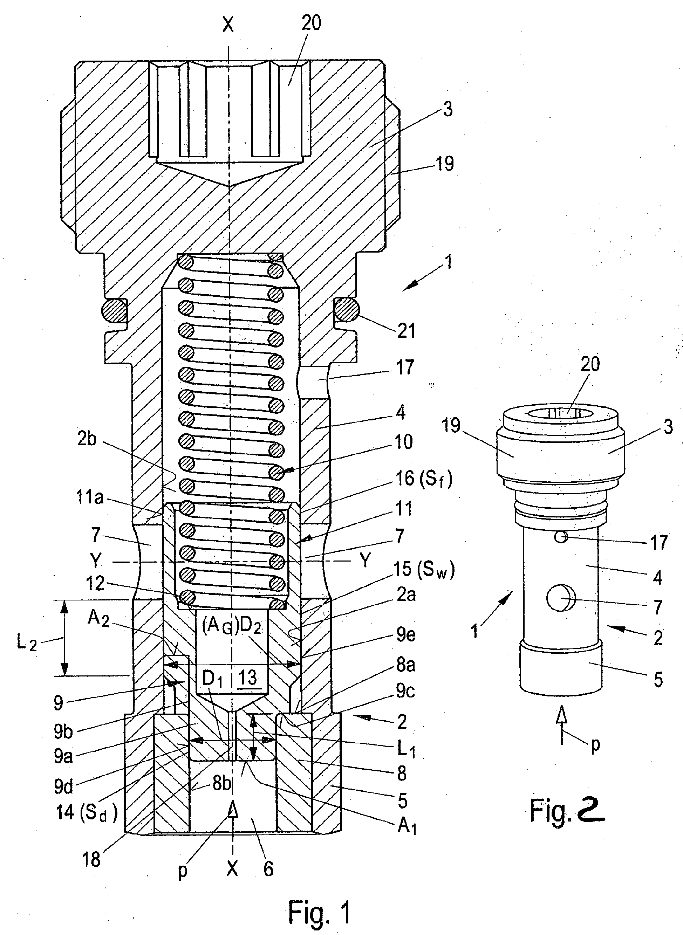

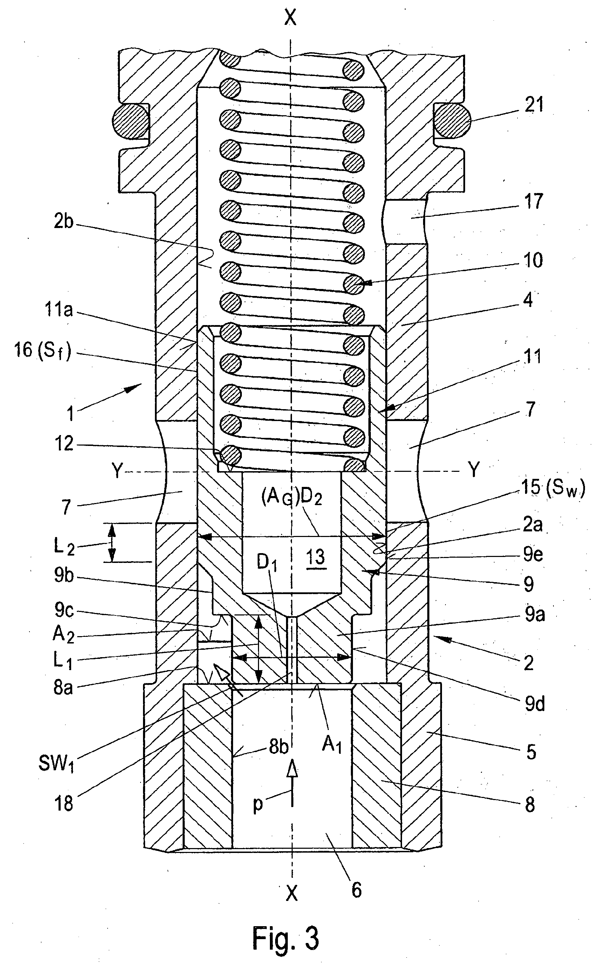

Wie zunächst Fig. 1 und 2, aber auch Fig. 3 bis 5 und 7 zeigen, weist ein erfindungsgemäßes Druckbegrenzungsventil 1, das insbesondere in einer Rücklaufleitung eines Common-Rail-Systems eines Verbrennungsmotors angeordnet werden kann, ein Ventilgehäuse 2 auf. Das Ventilgehäuse 2 umfasst einen Gehäusekopf 3, der in Fig. 3 bis 5 nicht gezeigt ist, sowie einen hohlzylindrischen Gehäusemantel 4 mit einem Ventilfuß 5.

In dem Ventilfuß 5 des Ventilgehäuses 2 befindet sich eine in axialer Richtung X-X geöffnete Einlassöffnung 6 für ein fluidisches Medium, insbesondere für einen flüssigen Kraftstoff. Axial beabstandet von der Einlassöffnung 6 befindet sich im Gehäusemantel 4 mindestens eine, insbesondere in radialer Richtung Y-Y geöffnete Auslassöffnung 7, wobei die Schnittdarstellungen in der Zeichnung in bevorzugter Ausführung jeweils zwei, einander diametral gegenüber liegende Auslassöffnungen 7 zeigen.

An die Einlassöffnung 6 schließt sich im Ventilfuß 5 ein innerer Ventilsitz 8 für einen Ventilkörper 9 an. Dieser Ventilsitz 8 ist bevorzugt durch ein im Ventilfuß 5 des Ventilgehäuses 2 befestigtes ringartiges Einsatzteil gebildet und weist bevorzugt eine zylindrische Innenfläche 8b auf. Durch eine andere Werkstoffwahl für das Einsatzteil als für das Ventilgehäuse 8 kann insbesondere eine für die Funktion des Ventils 1 erforderliche höhere Maßhaltigkeit im Bereich des Ventilsitzes 8 gewährleistet werden.

Zwischen dem Ventilkörper 9 und einer Schließfeder 10, die als Schraubenfeder ausgebildet ist und gegen einen an der Einlassöffnung 6 wirkenden Druck p eine Schließkraft erzeugt, ist ein axial beweglicher, hohlzylindrischer Ventilkolben 11 angeordnet. Der Ventilkolben 11 ist in fertigungstechnisch wenig aufwändiger Weise zusammen mit dem Ventilkörper 9 als einstückiger Ventileinsatzkörper ausgebildet. Er weist in seinem Inneren eine Stufenbohrung auf, wodurch darin ein umlaufender Absatz 12 zur Abstützung der Schließfeder 10 und ein im Bereich des Ventilkörpers 9 endendes Sackloch 13 vorhanden sind.

Als Federwerkstoff kann vorzugsweise ein Stahl mit der Bezeichnung 1.4031 (nach DIN EN 10 027) bzw. X5CrNi18-10 (nach DIN EN 10 088) zum Einsatz kommen, als Werkstoff für den Gehäusemantel 4 ein jeweils karbonitrierter Stahl mit der Bezeichnung 1.0718 bzw. 11SMnPb30+C oder 1.0715 oder 1.7139 bzw. 16 MnCrS5. Der Ventilkörper 9 und der Ventilkolben 11 können bevorzugt aus einem gehärteten Stahl mit der Bezeichnung 1.4034+S bzw. X46Cr13 hergestellt werden und der Ventilsitz 8 bevorzugt aus gehärtetem Stahl mit der Bezeichnung 1.4031 bzw. X5CrNi18-10.

Das Ventil 1 kann derart in einer nicht dargestellten Kraftstoff-Rücklaufleitung eingesetzt werden, dass es über die Einlassöffnung 6 mit dem Druck p beaufschlagt wird, der jeweils innerhalb der Rücklaufleitung herrscht und vorzugsweise von einer nicht dargestellten Niederdruckpumpe aufgebaut wird. Dabei ist das Ventil 1 hinsichtlich der Schließkraft der Schließfeder 10 so ausgelegt, dass es ab einem bestimmten Druck p öffnet, indem der Ventilkörper 9 gegen die Schließkraft von dem Ventilsitz 8 abhebt. Der Druck p wirkt dann weiter auf den Ventilkolben 11, so dass dieser ebenfalls gegen die Schließkraft verschoben wird, bis er die Auslassöffnung 6 zumindest teilweise freigibt und dadurch öffnet. Zum Schließen wirkt der Ventilkolben 11 auf den Ventilkörper 9, um diesen in den Ventilsitz 8 zu drücken und dadurch die Einlassöffnung 6 zu schließen.

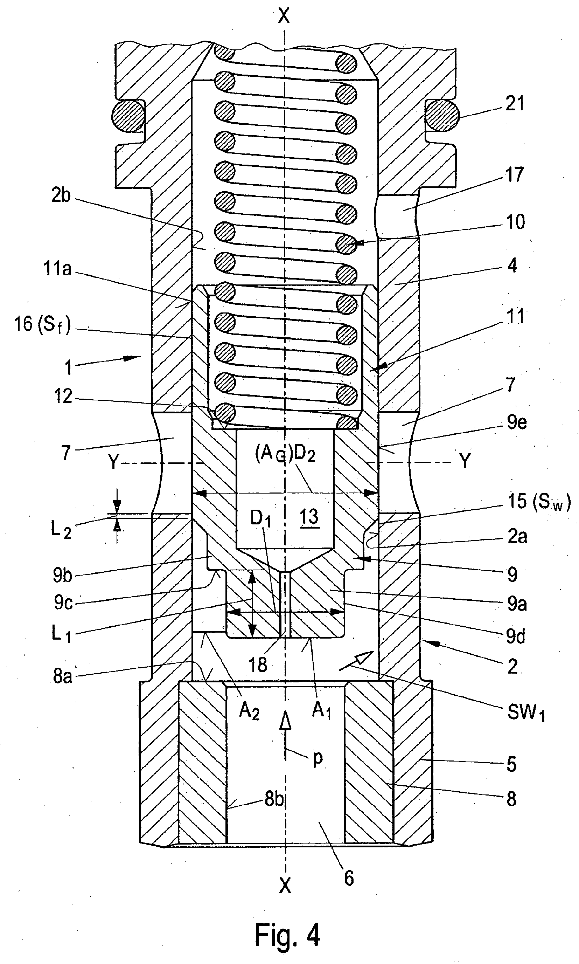

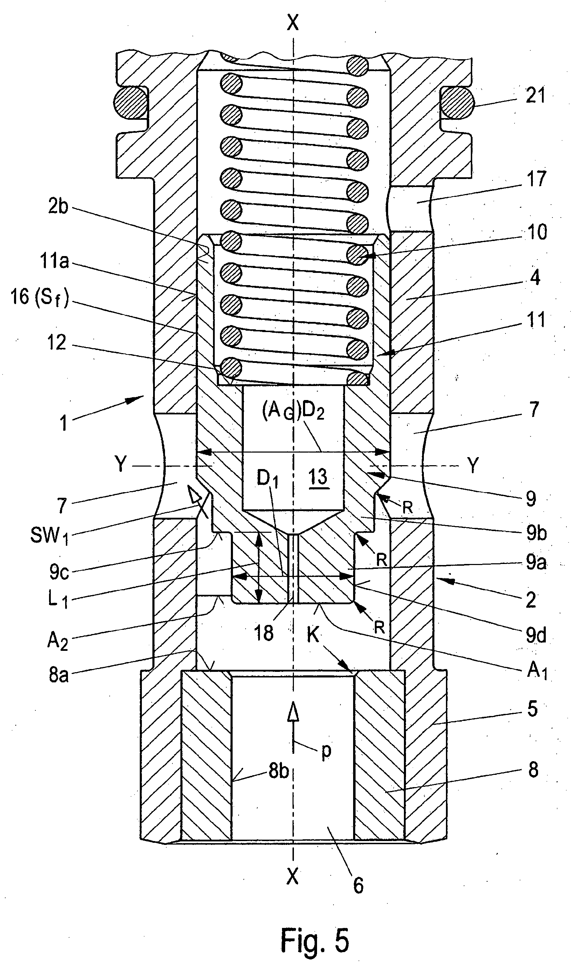

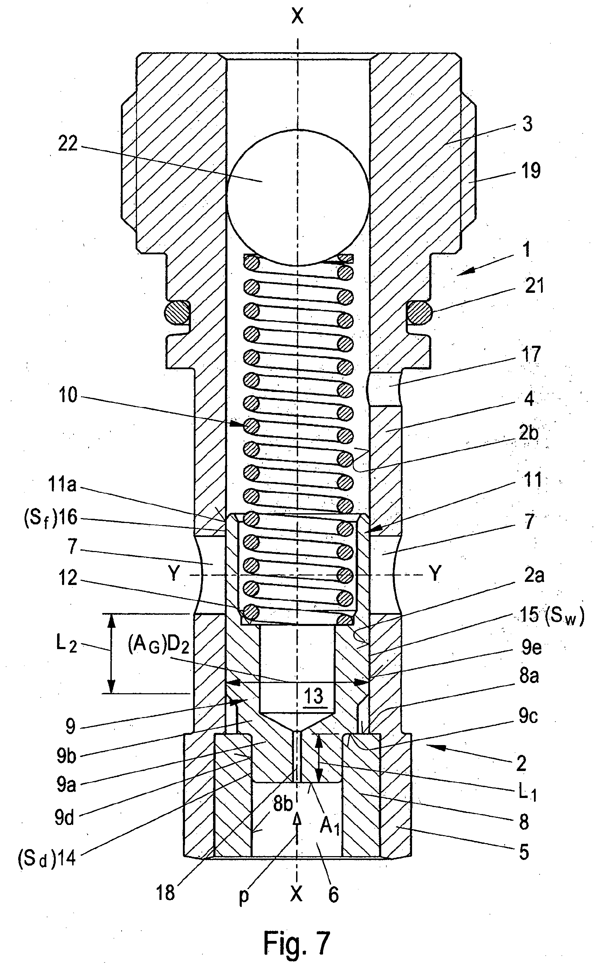

Bei dem erfindungsgemäßen Druckbegrenzungsventil 1 ist - wie bereits erwähnt - in bevorzugter Ausgestaltung die bzw. jede von vorzugsweise zwei diametral gegenüberliegenden Auslassöffnungen 7 als Radialöffnung im Gehäusemantel 4 des Ventilgehäuses 2 angeordnet. Hierbei sind die Auslassöffnungen 7 und der Ventilkolben 11 relativ zueinander derart angeordnet, dass der Ventilkolben 11 die Auslassöffnungen 7 in einer Öffnungsstellung (Fig. 5) zumindest bereichsweise in Richtung der Einlassöffnung 6 freigibt und zumindest in einer Schließstellung (Fig. 1,7), aber auch in zwischen Öffnungs- und Schließstellung liegenden Zwischenstellungen (Fig. 3 und 4) schieberartig überdeckt.

Erfindungsgemäß ist der Ventilkörper 9 als Stufenkolben mit zwei Stufen 9a, 9b ausgebildet, die durch einen umfangsgemäß verlaufenden ringförmigen Absatz 9c voneinander getrennt sind. Der Absatz 9c schlägt in der in Fig. 1 und 7 gezeigten Schließstellung des Ventils 1 an einer ihm axial zugewandten inneren Stirnfläche 8a des Ventilsitzes 8 an und begrenzt damit die axiale Bewegung des Ventilkörpers 9 in Wirkungsrichtung der Feder 10 bzw. entgegen der Wirkungsrichtung des Druckes p.

In seiner ersten Stufe 9a weist der Ventilkörper 9 dabei auf seiner der Einlassöffnung 6 zugewandten Seite eine erste, in axialer Richtung X-X mit dem Druck p beaufschlagbare Fläche A₁ auf. Diese Fläche A₁ ist die in der dargestellten Ausführung kreisförmige Stirnfläche des Ventilkörpers 9, wobei ihr Flächeninhalt durch deren Durchmesser D₁ bestimmt wird.

Des Weiteren weist der Ventilkörper 9 in seiner ersten Stufe 9a eine Länge L₁ auf, über die er in seiner bzw. der Schließstellung des Ventils 1 mit seiner Außenfläche 9d einen umfangsgemäß verlaufenden, eine Spaltweite S_{d} aufweisenden Drosselspalt 14 mit der Innenfläche 8b des Ventilsitzes 8 ausbildet. Der Spalt 14 bewirkt im erfindungsgemäßen Ventil 1 einen hydraulischen Teilwiderstand einer vorteilhafterweise in das Ventil 1 integrierten hydraulischen Drosselung zum Dämpfen der Bewegung des Ventilkörpers 9 und des Ventilkolbens 11, bzw. zum Dämpfen der Bewegung des einstückig aus diesen Teilen 9, 11 gebildeten Ventileinsatzkörpers.

In seiner zweiten Stufe 9b weist der Ventilkörper 9 eine zweite, in axialer Richtung X-X mit dem Druck p beaufschlagbare Fläche A₂ auf, die zusammen mit der ersten Fläche A₁ - in einem zur Längsachse X-X senkrechten Schnitt gesehen - eine in der dargestellten Ausführung kreisförmige Gesamtdruckfläche A_{G} bildet. Diese zweite, in axialer Richtung X-X mit dem Druck beaufschlagbare Fläche A₂ ist in der dargestellten Ausführung kreisringförmig, wobei ihr Flächeninhalt durch die Differenz eines maximalen Außendurchmessers D₂ des Ventilkörpers 9 in seiner zweiten Stufe 9b und des Durchmessers D₁ der kreisförmigen Stirnfläche des Ventilkörpers 9 bestimmt wird. Sie ist in den Figuren jeweils durch eine halbseitig eingezeichnete, dicke radial ausgerichtete Projektionslinie angedeutet und mit ihrem Bezugszeichen A₂ bezeichnet. Die kreisförmige Gesamtdruckfläche A_{G} ergibt sich allein aus dem maximalen Außendurchmesser D₂ des Ventilkörpers 9, wobei ihr Bezugszeichen A_{G} zur Veranschaulichung in der Zeichnung in Klammern hinter das Bezugszeichen D₂ für den maximalen Außendurchmesser gesetzt ist. Dieser Außendurchmesser D₂ ist identisch mit dem des Ventilkolbens 11, der damit einen Außenquerschnitt A₂ aufweist, der größer als der Außenquerschnitt A₁ des Ventilkörpers 9 in seiner ersten Stufe 9a ist.

In der zweiten Stufe 9b des Ventilkörpers 9 befindet sich zwischen einer Außenfläche 9e des Stufenkolbens und einer Innenfläche 2a des Gehäusemantels 4 ein zweiter umfangsgemäßer Drosselspalt 15, welcher sich über eine axiale Länge L₂ erstreckt.

Insbesondere durch eine spezielle Dimensionierung der Längen L₁, L₂, der Spaltweiten S_{d}, S_{w} und der Durchmesser D₁, D₂ der beiden Drosselspalte 14, 15 des erfindungsgemäßen Ventils 1 kann für ein Medium mit bestimmten charakteristischen Eigenschaften, wie insbesondere einer dynamischen bzw. kinematischen Viskosität, entsprechend der in der Hydraulik bekannten, sogenannten Drosselgleichung eine gewünschte Drosselwirkung, d. h. ein bestimmtes, insbesondere sehr kleines Verhältnis von pro Zeiteinheit durchgesetzter Fluidmenge Q zu einer über die Gesamtlänge der Drosselspalte 14, 15 auftretenden Druckdifferenz Δp bzw. ein aus den beiden hydraulischen Teilwiderständen der Drosselspalte 14, 15 sich additiv ergebender hydraulischer Gesamtwiderstand eingestellt werden. Sofern bzw. solange der gesamte Druck p über die Drosselspalte 14, 15 abfällt bzw. abfallen soll, ist die genannte Druckdifferenz Δp mit dem Betriebsdruck p identisch.

Hierbei ist es bevorzugt, dass der zweite Drosselspalt 15 in Länge L₂, Umfang π * D₂ und Spaltweite Sw derart ausgelegt ist, dass der durch ihn bewirkte hydraulische Teilwiderstand geringer ist als der hydraulische Teilwiderstand des ersten Drosselspaltes 14. Hierzu sei bemerkt, dass die Durchmesser D₁, D₂ der Flächen A₁, A₂ hier näherungsweise gleich den mittleren Durchmessern D₁, D₂ der Drosselspalte 14, 15 gesetzt werden, da die relativen Abweichungen äußerst gering sind.

Dabei weist der zweite Drosselspalt 15 eine kleinere Spaltweite S_{w} auf, als es die Spaltweite S_{d} des ersten Drosselspaltes 14 ist. Trotz dieser geringeren Spaltweite S_{w} kann der Drosselspalt 15 jedoch die weniger drosselnde Wirkung, also einen geringeren hydraulischen Teilwiderstand, haben, als der erste Drosselspalt 14, da die widerstandsserhöhend wirkende geringere Spaltweite durch eine widerstandssenkend wirkende geringere Länge L₂ bei Schließstellung des Ventils 1 bei dem ebenfalls widerstandssenkend wirkenden größeren Durchmesser D₂ kompensiert werden kann.

Insbesondere entsprechend dieser Ausgestaltung wird in dem erfindungsgemäßen Ventil 1 mit Vorteil in erster Näherung die strömungstechnische Charakteristik einer bekanntermaßen als Ventilkörper eingesetzten Kugel approximiert, ohne dass jedoch die Nachteile eines kugelförmigen Ventilkörpers in Kauf genommen werden müssten.

Ein weiterer umfangsgemäßer Spalt 16 mit einer Spaltweite S_{f} befindet sich auf der dem Gehäusekopf 3 zugewandten Seite des Ventilkolbens 11 bzw. des aus Ventilkörper 9 und Ventilkolben 11 gebildeten Ventileinsatzkörpers auf der dem Ventilfuß 5 abgewandten Seite der Einlassöffnung 6. Der Spalt 16 ist - wie der zweite Drosselspalt 15, der sich auf der dem Ventilfuß 5 zugewandten Seite der Einlassöffnung 6 befindet - zwischen einer hier mit dem Bezugszeichen 2b bezeichneten Innenfläche des Gehäusemantels 4 und der hier mit dem Bezugszeichen 11a bezeichneten Außenfläche des Ventilkolbens 11 gebildet.

Die Spaltweite S_{f} dieses Spaltes 16 kann bevorzugt sehr klein und in fertigungstechnisch optimaler Weise genauso groß wie die Spaltweite S_{w} des zweiten Drosselspaltes 15 gehalten werden. Sowohl der zweite Drosselspalt 15, als auch der weitere umfangsgemäße Spalt 16 wirken dabei mit Vorteil als Führungsspalte für den Ventilkolben 11. Der zweite Drosselspalt 15 führt dabei mit der hydraulischen Funktion der Drosselung - in Strömungsrichtung des Fluids gesehen - vor der Auslassöffnung 7, der weitere umfangsgemäße Spalt 16 ohne hydraulische Funktion hinter der Auslassöffnung 7. Eine gute Führung des Kolbens kann dabei durch ein geringes Umfangsspiel erreicht werden, wobei die entsprechenden Spaltweiten S_{w}, S_{f} kleiner sind als die Spaltweite S_{d} des ersten Drosselspaltes 14.

In weiterer bevorzugter Ausführung kann das Ventilgehäuse 2 in seinem Gehäusemantel 4, insbesondere in Kopfnähe außerhalb des durch den Ventilkolben 11 überdeckbaren Bereichs, mindestens eine radiale Entlastungsöffnung 17 aufweisen, um die Öffnungsbewegung des Ventilkolbens 11 zu ermöglichen, indem aus dem die Feder 10 aufnehmenden Raum dort enthaltenes Fluid entweichen und im Falle von Kraftstoff durch die Entlastungsöffnung 17 vorzugsweise ebenfalls in einen Tank zurückgeführt werden kann.

Dabei kann vorteilhafterweise zur Entlüftung und/oder zur Aufrechterhaltung eines Soll-Leckage-Volumenstroms in das erfindungsgemäße Ventil 1 eine Leckagepassage integriert sein. Eine solche Leckagepassage kann als äußere Bypassleitung ausgeführt werden oder bevorzugt - wie dargestellt - mittels eines insbesondere als Durchgangsbohrung durch die Stirnfläche A₁ des Ventilkörpers 9 ausgeführten axial verlaufenden Leckagekanals 18. Die Dimensionierung sollte dabei insbesondere derart erfolgen, dass der Kanal 18 drosselnd wirkt. Auch in der Schließstellung kann so durch den Leckagekanal 18 ständig ein Leckstrom Q_{L} durch den Ventilkörper 9, den Innenraum des Ventilkolbens 11 und den die Feder 10 aufnehmenden Raum fließen und dann an der Entlastungsöffnung 17 wieder aus dem Ventilgehäuse 2 austreten.

Der Leckagekanal 18 weist bevorzugt einen hydraulischen Widerstand auf, der sehr viel kleiner ist als die der beiden Drosselspalte 14, 15 und hat daher für sich genommen keinen signifikanten Einfluss auf die Wirkungsweise der Drosselspalte 14, 15. Seine Relevanz tritt erst in Erscheinung, wenn die Wirkung der Drosselspalte 14, 15 nicht mehr gegeben ist und die Relation Q zu p durch die Spaltweite S_{w} des zweiten Drosselspaltes 15 und den Leckagekanal 18 bestimmt wird.

Auf dem Weg über den Leckagekanal 18 durch den Gehäusemantel 4 des erfindungsgemäßen Ventils 1 und schließlich durch die Entlastungsöffnung 17 kann vorteilhafterweise auch im Niederdrucksystem befindliche Luft - bei einer Erstbefüllung des Systems mit Kraftstoff, beispielsweise beim Anlaufvorgang einer Niederdruckpumpe - durch das Ventil 1 aus dem System gedrückt und damit eine Entlüftung vorgenommen werden.

Zur einfachen Montage in einem Common-Rail-System kann das Ventilgehäuse 2 bevorzugt als Hohlschraube mit einem Außengewinde 19 und einem, insbesondere im Bereich des Kopfes, der Einlassöffnung 6 axial gegenüberliegenden Kraftangriff 20 für ein Drehwerkzeug sowie mit einer äußeren Umfangsdichtung 21 ausgebildet sein, wie dies insbesondere Fig. 1 und 2 zeigen.

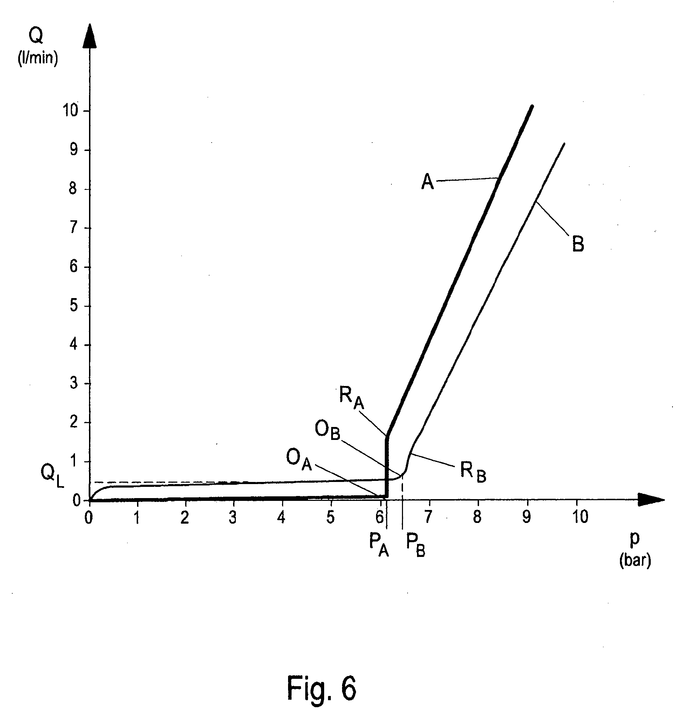

Durch die beschriebene erfindungsgemäße Ausgestaltung wird eine vorteilhafte Funktionsweise erreicht, die für den Öffnungsvorgang des Ventils 1 im Folgenden unter Bezugnahme auf die Figurenfolge 1, 3, 4, 5 und unter besonderer Bezugnahme auf Fig. 6, welche die Abhängigkeit einer Durchflussmenge Q pro Zeiteinheit durch das Ventil von dem an der Einlassöffnung 6 wirkenden Druck p zeigt, erläutert wird.

Ausgehend von der Schließstellung gemäß Fig. 1, in der zunächst ein in der Einlassöffnung 6 auf die Stirnfläche A₁ des Ventilkörpers 9 wirkender Druck p vorliegt, der den Wert Null hat, ist in Fig. 6 das Regelverhalten des erfindungsgemäßen Ventils 1 für zwei unterschiedliche Ausführungsformen A, B bis zu einem etwa bei 10 bar liegenden Maximaldruck dargestellt. Die in Fig. 6 mit dem Bezugszeichen A bezeichnete Kurve bezieht sich dabei auf eine Ausführung ohne Leckagekanal 18, die Kurve B auf eine Ausführung mit Leckagekanal 18.

In der Schließstellung wird bei geringem Druck p der Ventilkörper 9 durch die Kraft der Schließfeder 10 im Ventilsitz 8 gehalten. Für die Ausführung mit Leckagekanal 18 ist dabei zu erkennen, dass dabei ständig ein erwünschter Leckagestrom (Mittelwert Q_{L} in Fig. 6) durch das Ventil 1 fließt, was bei der Ausführung ohne Leckagekanal 18 nicht der Fall ist. Bedingt durch die beiden Drosselspalte 14, 15 bleibt der Volumenstrom Q dort nahezu gleich Null. Die Größe des Leckagestroms Q_{L} weist darauf hin, dass der Querschnitt des Strömungskanals 18 jedenfalls größer ist als der Querschnitt des Drosselspalts 14.

Aus dem Produkt des Druckes p mit dem Flächeninhalt der - abgesehen vom ausgenommenen Leckagekanal 18 - kreisförmigen Stirnfläche A₁ des Ventilkörpers 9 resultiert eine erste Gegenkraft zur Kraft der Feder 10, die mit ansteigendem Druck p wächst und den Ventilkörper 9 axial in Richtung des Ventilkopfes 3 schiebt. Das Ventil 1 bleibt dabei zunächst immer noch geschlossen, es verkürzen sich aber die Längen L₁, L₂, über die die erste Stufe 9a und die zweite Stufe 9b des Ventilkörpers 9 an der Innenfläche 8b des Ventilsitzes 8 anliegen. Dadurch nehmen sowohl die hydraulischen Teilwiderstände der beiden Drosselspalte 14, 15, als auch entsprechend der hydraulische Gesamtwiderstand geringfügig ab, und es kommt in beiden Kurven A, B zu einem, jedoch nür vergleichsweise sehr kleinen, Anstieg des Volumenstroms Q.

In dem Moment (erste Arbeitspunkte O_{A}, O_{B} in Fig. 6), in dem die erste Stufe 9a des Ventilkörpers 9 aus dem Ventilsitz 8 austritt - siehe dazu Fig. 3 - tritt in den Kurvenverläufen A, B des Q-p-Diagramms ein sprunghafter Anstieg des Volumenstroms Q auf, der damit verbunden ist, dass sich zwischen dem Ventilsitz 8 und dem Ventilkörper 9 ein Strömungsweg (Pfeil SW₁ in Fig. 3, 4) öffnet. Der (statische) Druck p (Werte p_{A} und p_{B} in Fig 6) bleibt dabei nahezu konstant, da entsprechend dem Satz von Bernoulli ein weiterer Druckzuwachs im Niederdrucksystem in Bewegungsenergie umgesetzt wird.

Ein Querschnitt des Strömungsweges SW₁ zwischen Ventilsitz 8 und Ventilkörper 9 wächst dabei unter Weiterbewegung des Ventilkolbens 11 relativ rasch an, da jetzt der Druck p plötzlich auf die Gesamtdruckfläche A_{G} des Ventilkörpers 9 wirkt, woraus eine zweite Gegenkraft zur Kraft der Feder 10 resultiert, die auch bei gleichbleibendem Druck p sprunghaft größer ist als die erste Gegenkraft.

Der Zusammenhang zwischen Volumenstrom Q und Druck p kann dabei jetzt nicht mehr - wie anfänglich - mit der Drosselgleichung der Hydraulik beschrieben werden, jedoch mit der sogenannten Blendengleichung, wonach der Volumenstrom proportional zur Blendenfläche, also dem Querschnitt des Strömungsweges SW₁, und zur Quadratwurzel des Druckabfalls ist.

Die Begriffe "Blende" und "Drossel" stehen hierbei für idealisierte Systemelemente, wobei das erfindungsgemäße Druckbegrenzungsventil 1, insbesondere durch seine variable Einstellbarkeit, die vorteilhaften Eigenschaften beider Systemelemente verbindet.

Sofern bzw. solange der gesamte Druck p über den Strömungsweg SW₁ abfällt bzw. abfallen soll, ist dieser Druckabfall mit dem Betriebsdruck p identisch. In dieser Funktionsphase des Ventils 1 ist - wie auch noch Fig. 4 zeigt - die Auslassöffnung 7 immer noch durch den Ventilkolben 11 verschlossen.

Der hydraulische Teilwiderstand des ersten Drosselspaltes 14 ist zwar entfallen, der hydraulische Teilwiderstand des zweiten Drosselspaltes 15 ist jedoch noch vorhanden, allerdings aufgrund der verringerten Länge L₂ gegenüber der anfänglichen Schließstellung des Ventils 1 mit geringerer Größe.

Wenn der Ventilkolben 11 nach einer weiteren axialen Verschiebung in Richtung des Kopfes 3 die Auslassöffnung 7 freigibt (zweite Arbeitspunkte R_{A}, R_{B} in Fig. 6) - siehe dazu Fig. 5 - tritt in den Kurvenverläufen A, B des Q-p-Diagramms ein Knick auf, der damit verbunden ist, dass sich zwischen dem Gehäusemantel 4 und dem Ventilkörper 9 unter sukzessiver Vergrößerung des freigegebenen Querschnitts der Auslassöffnung 7 ein weiterer Strömungsweg (Pfeil SW₂ in Fig. 5) öffnet.

Der Anstieg der Q-p-Kurven A, B wird dadurch etwas weniger steil, bleibt jedoch noch sehr viel steiler als in der Phase, in der die erste Stufe 9b des Ventilkörpers 9 sich noch im Ventilsitz 8 befand. Der Zusammenhang zwischen Volumenstrom Q und Druck p kann dabei auch in dieser Phase wiederum mit der Blendengleichung der Hydraulik beschrieben werden. Der hydraulische Widerstand einer Blende ist vergleichsweise sehr viel kleiner als der einer Drossel. Daraus resultiert, dass ein weiterer Druckzuwachs im Niederdrucksystem nicht zu einer signifikanten statischen Druckerhöhung, sondern zu einem Anstieg der Durchflussmenge Q führt, was gleichbedeutend mit einer höheren Strömungsgeschwindigkeit des Mediums und damit einem höheren Anteil an Bewegungsenergie ist.

Umgekehrt führt bei einem Absinken des Volumenstroms Q zum Ventil 1 dies nicht sofort zu einem übermäßigen Druckabfall. Bis zu den Arbeitspunkten O_{A} und O_{B} kann mit Vorteil der Volumenstrom Q um einen beträchtlichen Betrag abfallen, ohne dass der Druck p auf den Wert Null absinkt. Nach Erreichen der durch die Dimensionierung der Drosselspalte 14, 15 einstellbaren Druckgrenze (Drücke p_{A}, p_{B}) kann - wenn gewünscht (Kurve B) - eine Mindestdurchflussmenge in Form des Leckagestroms Q_{L} aufrechterhalten werden.

Die beiden in Fig. 6 dargestellten Kurven A und B unterscheiden sich dabei nicht nur durch das Vorhandensein des Leckagestroms Q_{L} bei der Kurve B, sondern auch dadurch, dass der Volumenstromanstieg der Kurve B erst bei einem höheren Druck p_{B} erfolgt, als es bei der Kurve A der Fall ist (Druck p_{A}), und dass die Übergänge im "Sprungpunkt" O_{B} und im "Knickpunkt" R_{B} in vorteilhafter Weise weniger abrupt ausgebildet sind als in den entsprechenden Arbeitspunkten O_{A} und R_{A} der anderen Ausführung. Dies kann durch eine abgerundete bzw. minimal konische Formgestaltung der entsprechenden Teile, beispielsweise an den in Fig. 5 mit K (für Konus) und R (für Radius) bezeichneten Innen- und Außenkanten des Ventilkörpers 9 und des Ventilsitzes 8 erreicht werden.

Auf die Einstellung der selbstdämpfenden und druckbegrenzenden Eigenschaften des erfindungsgemäßen Ventils 1 kann mit Vorteil durch die in variabler Weise gestaltbare Drosselstelle (Drosselkanal 14) und das modifizierbare mehrstufige Regelverhalten Einfluss genommen werden. Exemplarisch dafür sollen für bevorzugte, konkrete Ausführungen des erfindungsgemäßen Ventils 1 noch einige Bemessungen angegeben werden, wobei dies die Erfindung natürlich nicht darauf beschränkt:
Je nach einer exemplarischen 5 bar- oder 7,5 bar-Version für den Maximaldruck können die Federkonstanten der Schließfeder 10 im Bereich von 3 N/mm bis 5 N/mm liegen.
Je nach Durchfluss-Anforderung können dabei die Flächenverhältnisse A₁ zu A_{G} dadurch bestimmt sein, dass die druckbeaufschlagbare Fläche A₁ eine Größe im Bereich von 18 mm² bis zu 30 mm² aufweist und die Gesamtdruckfläche A_{G} eine Größe im Bereich von 70 mm² bis 90 mm². Das entspricht einem je nach Durchfluss-Anforderung gewählten Durchmesserverhältnis von D₁ im Bereich von 4,9 mm bis 6,0 mm zu D₂ im Bereich von 9,6 mm bis 10,6 mm, oder allgemeiner ausgedrückt ergibt sich daraus: D₁ zu D₂ = 1 : (1,60 ... 2,16).

Für den ersten Drosselspalt 14 kann dabei insbesondere eine Spaltweite S_{d} im Bereich von 0,01 mm bis 0,04 mm gewählt werden, die bei vorzugsweise gewählten Passungen etwa 0,1 mm² bis 0,75 mm² Fläche entspricht. Der zweite Drosselspalt 15 in der zweiten Stufe 9b des Ventilkörpers 9 kann bevorzugt eine Spaltweite S_{w} im Bereich von 0,02 mm bis 0,09 mm aufweisen, die bei bevorzugt gewählten Passungen mit 0,5 mm² bis 1,4 mm² Fläche entspricht. Hierbei sollte insbesondere gelten: 0,1 ≤ S_{d} / S_{w} ≤ 2,0.

Was das Flächenverhältnis A₁ / A₂ betrifft, so ist dieses im Hinblick auf eine erwünschte Regelcharakteristik des erfindungsgemäßen Ventils 1 dann als optimal anzusehen, wenn gilt: 0,2 ≤ A₁ / A₂ ≤ 0,8, wobei A₁ - wie oben dargelegt - eine Kreisfläche und A₂ - wie oben dargelegt - eine Ringfläche ist.

Optimale Durchmesserverhältnisse D₁ / D₂ sowohl im Hinblick auf die Ausbildung der Drosselspalte 14, 15, als auch im Hinblick auf die Druckflächen A₁, A₂ ergeben sich dabei zu 0,4 ≤ D₁ / D₂ ≤ 0,65.

Ein Verhältnis L₁ / L₂ der Längen L₁, L₂ der Drosselspalte 14, 15 ist insbesondere dann als optimal anzusehen, wenn gilt, 0,25 ≤ L₁ / L₂ ≤ 2,0.

Des Weiteren sollten die hydraulischen Teilwiderstände der beiden Drosselspalte 14, 15 bevorzugt derart ausgewählt werden, dass die Bedingung 0,2 ≤ Δp₂ / Δp₁ ≤ 1,0 erfüllt ist, wobei jeweils Δp₁ der Druckabfall über den ersten Drosselspalt 14 und Δp₂ der Druckabfall über den zweiten Drosselspalt 15 ist.

Die Erfindung ist nicht auf die dargestellten und beschriebenen Ausführungsbeispiele beschränkt, sondern umfasst auch alle im Sinne der Erfindung gleichwirkenden Ausführungen.

Auch kann der Fachmann das erfindungsgemäße Druckbegrenzungsventil 1 durch weitere zweckmäßige technische Merkmale ergänzen, ohne dass der Rahmen der Erfindung verlassen wird. So zeigt die in Fig. 7 dargestellte Ausführung eines erfindungsgemäßen Druckbegrenzungsventils 1 das als hohlzylindrisches Schraubteil mit dem Gewinde 19 ausgebildete Ventilgehäuse 2, in dessen Innenraum der Ventilkolben 11 angeordnet ist, in dem - wie beschrieben - koaxial die als Schraubendruckfeder ausgebildete Schließfeder 10 angeordnet ist, welche sich einendig an dem umlaufenden Absatz 12 in der Stufenbohrung des Kolbens 14 abstützt. Das Ventilgehäuse 2 wird im Bereich seines Kopfes 3 nach außen druckdicht durch eine im Gehäuseinneren aufgenommene und darin kraft- und formschlüssig befestigte Kugel 22 verschlossen, an der sich die Schließfeder 10 anderendig abstützt. Die Vorspannung der Feder 10 kann unter Messung der Federkraft durch ein entsprechend tiefes Einpressen der Kugel 22 in den Gehäuseinnenraum eingestellt werden. Dadurch kann eine Federtoleranz ausgeglichen werden, was wichtig für die genaue Festlegung der Arbeitspunkte O_{A}, O_{B}, R_{A}, R_{B} des Ventils 1 ist. Bei einer Federrate von 3,9 N/mm können beispielsweise Toleranzen im Bereich von +/- 1,5 N/mm auftreten. Auch für andere Federn 10 sind solche Werte, die bis zu etwa 40 Prozent Abweichung erreichen können, typisch. Alternativ kann auch in einem ersten Verfahrensschritt die Federcharakteristik ermittelt werden, um dann in einem zweiten Verfahrensschritt nach einem Einlegen der Feder 10 in das Gehäuse die Kugel 22 in entsprechender Tiefe mit Dichtsitz im Gehäusekopf 3 zu fixieren.

Je nach der in erwünschter Weise gestaltbaren Auslegung ergeben sich im Bereich der als optimal angegebenen Längenverhältnisse 0,25 ≤ L₁ / L₂ ≤ 2,0 der Drosselspalte 14, 15 unterschiedliche Q-p-Kurven. So lassen sich hinsichtlich der Längenverhältnisse der Drosselspalte 14; 15 drei verschiedene Grundvarianten der Konstruktion und Funktionsweise ableiten. In dem ersten Fall, welcher in der Zeichnung dargestellt ist, bei dem der zweite Drosselspalt 15 länger ist als der erste Drosselspalt 14 ist, bleibt der zweite Spalt 15 noch erhalten und wirkt drosselnd, wenn der erste Spalt 14 schon nicht mehr wirksam ist (Fig. 3). Insofern es sich bei der dabei eintretenden Blendenwirkung um die einer Blende mit variabler Öffnungsweite zwischen dem Ventilsitz 8 und dem federbelasteten Ventilkörper 9 handelt, stellt sich jedoch keine für eine Blende als signifikant anzusehende Q-p-Kurve ein, sondern ein annähernd linearer Verlauf Q(p). Für den zweiten Fall, dass beide Drosselspalte 14, 15 gleich lang sind, nimmt beim Öffnen des Ventils die Relevanz der drosselnden Eigenschaften beider Spalte 14, 15 in gleichem Maß ab und ihre drosselnden Wirkungen fallen gleichzeitig weg, so dass auch dann die Blendenwirkungen gleichzeitig eintreten. Bei völlig geöffnetem Ventil stellt schlussendlich bevorzugt die Größe der Auslassöffnung 7 eine Limitierung des maximalen Ausströmquerschnitts dar. Für den dritten Fall, dass der erste Dosselspalt 14 länger ist als der zweite Drosselspalt 15 ist, bleibt der erste Spalt 14 noch erhalten und wirkt drosselnd, wenn der zweite Spalt 15 schon nicht mehr wirksam ist. Für die drei Fälle kann sich auch jeweils ein unterschiedlicher Abstand zwischen dem axialen Ende des ersten Drosselspaltes 14 und dem Anfang des zweiten Drosselspaltes 15 ergeben. Durch eine Minimierung dieses Abstands kann mit Vorteil eine axiale Bauraumeinsparung bzw. eine bessere Ausschöpfung der axialen Baulänge des erfindungsgemäßen Ventils 1 erreicht werden.

Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmal definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichenliste

- 1: Feder
- 2: Gehäuse von 1
- 2a: Innenfläche von 4 (in Wechselwirkung mit 9)
- 2b: Innenfläche von 4 (in Wechselwirkung mit 11)
- 3: Gehäusekopf von 2
- 4: Gehäusemantel von 2
- 5: Gehäusefuß von 2
- 6: Einlassöffnung von 1
- 7: Auslassöffnung von 1
- 8: Ventilsitz von 1
- 8a: innere Stirnfläche von 8
- 9: Ventilkörper
- 9a: erste Stufe von 9
- 9b: zweite Stufe von 9
- 9c: Absatz in 9, Stufe 9a/9b
- 9d: Außenfläche von 9 im Bereich 9a
- 9e: Außenfläche von 9 im Bereich 9b
- 10: Schließfeder
- 11: Ventilkolben (einstückig mit 9)
- 11a: Außenfläche von 11 im Bereich von 16
- 12: Absatz in 11
- 13: Sackloch in 11
- 14: Drosselspalt zwischen 8 und 9
- 15: Umfangsspalt zwischen 4 und 9
- 16: Umfangsspalt zwischen 4 und 11
- 17: Entlastungsöffnung in 4
- 18: Leckagekanal in 9
- 19: Außengewinde von 1
- 20: Kraftangriff von 1
- 21: Umfangsdichtung
- 22: Kugel in 4 im Bereich von 3

- A: Kurve in Fig. 6, ausführung von 1 ohne 18 in 9
- A₁: erste druckbeaufschlagbare Querschnittsfläche von 9 (in 9a)
- A₂: zweite druckbeaufschlagbare Querschnittsfläche von 9 (in 9b)
- A_{G}: Gesamt-Druckfläche von 9 (Gesämtquerschnittsfläche)
- B: Kurve in Fig. 6, Ausführung von 1 mit 18 in 9
- D₁: Durchmsser von 9 in 9a
- D₂: Durchmesser von 9 in 9b
- K: Konus von 8 (Fig. 1)
- L₁: Länge von 14 (erste Länge)
- L₂: Länge von 15 (zweite Länge)
- O_{A}: erster Arbeitspunkt von A, Sprungpunkt von Q
- O_{B}: erster Arbeitspunkt von B, Sprungpunkt von Q
- R_{A}: zweiter Arbeitspunkt von A, Knickpunkt von Q
- R_{B}: zweiter Arbeitspunkt von B, Knickpunkt von Q
- p: Druck
- p_{A}: Druck bei O_{A}
- P_{B}: Druck bei O_{B}
- Q: Volumenstrom pro Zeiteinheit durch 1
- Q_{L}: Leckagestrom durch 1
- R: Radien an 9 (Fig. 1)
- S_{d}: Spaltweite von 14
- S_{f}: Spaltweite von 16
- S_{w}: Spaltweite von 15
- SW₁: Strömungsweg zwischen 8 und 9
- SW₂: Strömungsweg zwischen 9 und 4 durch 7
- X-X: Längsachse von 1
- Y-Y: Querachse von 1 durch 7

## Patentansprüche

1. Druckbegrenzungsventil (1), insbesondere zur Anordnung in einer Rücklaufleitung eines Common-Rail-Systems eines Verbrennungsmotors, mit einem Ventilgehäuse (2), welches einen Gehäusekopf (3) und einen hohlzylinderischen Gehäusemantel (4) aufweist, in dem sich in einem Ventilfuß (5) des Ventilgehäuses (2) eine axiale Einlassöffnung (6) und axial beabstandet von der Einlassöffnung (6) mindestens eine Auslassöffnüng (7) befinden, wobei sich im Ventilfuß (5) an die Einlassöffnung (6) ein innerer Ventilsitz (8) für einen Ventilkörper (9) anschließt, und wobei zwischen dem Ventilkörper (9) und einer Schließfeder (10), die gegen einen an der Einlassöffnung (6) wirkenden Druck (p) eine Schließkraft erzeugt, ein axial beweglicher Ventilkolben (11) angeordnet ist, wobei der Ventilkörper (9) einstückig mit dem Ventilkolben (11) als Stufenkolben ausgebildet ist, der in seiner ersten Stufe (9a) auf seiner der Einlassöffnung (6) zugewandten Seite eine erste, in axialer Richtung mit dem Druck (p) beaufschlagbare Fläche (A₁) sowie eine erste axiale Länge (L₁) aufweist, und der in seiner zweiten Stufe (9b) eine zweite, in axialer Richtung (X-X) mit dem Druck (p) beaufschlagbare Fläche (A₂) aufweist, die zusammen mit der ersten Fläche (A₁) eine Gesamtdruckfläche (A_{G}) bildet, sowie eine zweite axiale Länge (L₂) aufweist,
**dadurch gekennzeichnet, dass** der Ventilkörper (9) über die erste axiale Länge (L₁) in einer Schließstellung mit seiner Außenfläche (9d) einen ersten umfangsgemäß verlaufenden Drosselspalt (14) mit einer zylindrischen Innenfläche (8b) des Ventilsitzes (8) ausbildet, wobei in der zweiten Stufe (9b) über die zweite axiale Länge (L₂) hinweg zwischen der Außenfläche (9e) des Stufenkolbens (9) und einer Innenfläche (2a) des hohlzylindrischen Gehäusemantels (4) ein zweiter umfangsgemäß verlaufender Drosselspalt (15) mit einer zweiten Spaltweite (S_{w}) ausgebildet ist, die kleiner ist als die Spaltweite (S_{d}) des ersten Drosselspaltes (14).

2. Druckbegrenzungsventil (1) nach Anspruch 1,
**dadurch gekennzeichnet, dass** für das Verhältnis der Spaltweite (S_{d}) des ersten Drosselspaltes (14) zur Spaltweite (S_{w}) des zweiten Drosselspaltes (15) gilt: 0,1 ≤ S_{d} / S_{W} ≤ 2,0.

3. Druckbegrenzungsventil (1) nach einem der Ansprüche 1 bis 2,
**dadurch gekennzeichnet, dass** für das Verhältnis der Länge (L₁) des ersten Drosselspaltes (14) zur Länge (L₂) des zweiten Drosselspaltes (15) gilt: 0,25 ≤ L₁ / L₂ ≤ 2,0. 3

4. Druckbegrenzungsventil (1) nach einem der Ansprüche 1 bis 3,
**dadurch gekennzeichnet, dass** für das Verhältnis des Durchmessers (D₁) des ersten Drosselspaltes (14) zum Durchmesser (D₂) des zweiten Drosselspaltes (15) gilt: 0,40 ≤ D₁ / D₂ ≤ 0,65.

5. Druckbegrenzungsventil (1) nach einem der Ansprüche 1 bis 4,
**dadurch gekennzeichnet, dass** die beiden Drosselspalte (14, 15) hinsichtlich ihrer Längen (L₁, L₂), ihrer Durchmesser (D1, D₂) und ihrer Spaltweiten (S_{d}, S_{W}) derart ausgelegt sind, dass ein durch den zweiten Drosselspalt (15) bewirkter hydraulischer Teilwiderstand geringer ist als ein durch den ersten Drosselspalt (14) bewirkter hydraulischer Teilwiderstand.

6. Druckbegrenzungsventil (1) nach einem der Ansprüche 1 bis 5,
**dadurch gekennzeichnet, dass** für die beiden Drosselspalte (14, 15) die Bedingung 0,2 ≤ Δp₂ / Δp₁ ≤ 2,0 erfüllt ist, wobei jeweils Δp₁ den Druckabfall über den ersten Drosselspalt (14) und (Δp₂) den Druckabfall über den zweiten Drosselspalt (15) bezeichnet.

7. Druckbegrenzungsventil (1) nach einem der Ansprüche 1 bis 6,
**dadurch gekennzeichnet, dass** das Flächenverhältnis (A₁ / A₂) der ersten druckbeaufschlagbaren Fläche (A₁) zur zweiten druckbeaufschlagbaren Fläche (A₂) des Ventilkolbens (11) im Bereich 0,2 ≤ A₁ / A₂ ≤ 0,8 liegt.

8. Druckbegrenzungsventil (1) nach einem der Ansprüche 1 bis 7,
**dadurch gekennzeichnet, dass** die/jede Auslassöffnung (7) als Radialöffnung im Gehäusemantel (4) des Ventilgehäuses (2) angeordnet ist, wobei der Ventilkolben (9) die/jede Auslassöffnung (7) in einer Öffnungsstellung zumindest bereichsweise in Richtung der Einlassöffnung (6) freigibt und in einer Schließstellung schieberartig überdeckt.

9. Druckbegrenzungsventil (1) nach einem der Ansprüche 1 bis 8,
**dadurch gekennzeichnet, dass** der Ventilsitz (8) durch ein ringartiges, in dem Ventilgehäuse (4) befestigtes Einsatzteil gebildet ist, mit dem der Ventilkörper den ersten Drosselspalt (14) ausbildet.

10. Druckbegrenzungsventil (1) nach einem der Ansprüche 1 bis 9,
**dadurch gekennzeichnet, dass** das Ventilgehäuse (4) als Hohlschraube mit einem Außengewinde (19) und einem der Einlassöffnung (6) axial gegenüberliegenden Kraftangriff (20) für ein Drehwerkzeug sowie mit einer äußeren Umfangsdichtung (21) ausgebildet ist.

11. Druckbegrenzungsventil (1) nach einem der Ansprüche 1 bis 10,
**dadurch gekennzeichnet, dass** die Schließfeder (10) als Schraubendruckfeder ausgebildet ist, die sich einendig an einem Absatz (12) im Ventilkolben (11) und anderendig an einer im Inneren des Gehäuses (2) kraft- und formschlüssig befestigten Kugel (22) abstütz.

12. Druckbegrenzungsventil (1) nach einem der Ansprüche 1 bis 11, **gekennzeichnet durch** eine zur Entlüftung und/oder zur Aufrechterhaltung eines Soll-Leckage-Volumenstroms integrierte Leckagepassage, die als äußere Bypassleitung oder bevorzugt als ein insbesondere drosselnd wirkender Leckagekanal (18) ausgebildet ist, welcher vorzugsweise als Durchgangsbohrung **durch** die erste, in axialer Richtung mit dem Druck (p) beaufschlagbare Fläche (A₁) des Ventilkörpers (9) ausgeführt ist.

## Claims

1. Pressure-limiting valve (1), in particular for arrangement in a return line of a common rail system of an internal combustion engine, having a valve housing (2) which has a housing head (3) and has a hollow cylindrical housing shell (4) in which an axial inlet opening (6) is situated in a valve foot (5) of the valve housing (2) and at least one outlet opening (7) is situated so as to be axially spaced apart from the inlet opening (6), wherein, in the valve foot (5), the inlet opening (6) is adjoined by an inner valve seat (8) for a valve body (9), and wherein an axially movable valve piston (11) is arranged between the valve body (9) and a closing spring (10) which generates a closing force counter to a pressure (p) acting on the inlet opening (6), wherein the valve body (9) is formed integrally with the valve piston (11) as a stepped piston which, in its first step (9a) on its side facing toward the inlet opening (6), has a first axial length (L₁) and has a first surface (A₁) which can be acted on in an axial direction with the pressure (p), and which, in its second step (9b), has a second axial length (L₂) and has a second surface (A₂) which can be acted on in an axial direction (X-X) with the pressure (p) and which, together with the first surface (A₁), forms an overall pressure surface (A_{G}),
**characterized in that**, in a closed position, the valve body (9) forms, over the first axial length (L₁) and by way of its outer surface (9d), a first circumferentially running throttling gap (14) with a cylindrical inner surface (8b) of the valve seat (8), wherein, in the second step (9b), over the second axial length (L₂) and between the outer surface (9e) of the stepped piston (9) and an inner surface (2a) of the hollow cylindrical housing shell (4), there is formed a second circumferentially running throttling gap (15) with a second gap width (S_{w}) which is smaller than the gap width (S_{d}) of the first throttling gap (14).

2. Pressure-limiting valve (1) according to Claim 1, **characterized in that**, for the ratio of the gap width (S_{d}) of the first throttling gap (14) to the gap width (S_{w}) of the second throttling gap (15), the following applies: 0.1 ≤ S_{d} / S_{w} ≤ 2.0.

3. Pressure-limiting valve (1) according to either of Claims 1 and 2, **characterized in that**, for the ratio of the length (L₁) of the first throttling gap (14) to the length (L₂) of the second throttling gap (15), the following applies: 0.25 ≤ L₁ / L₂ ≤ 2.0.

4. Pressure-limiting valve (1) according to one of Claims 1 to 3, **characterized in that**, for the ratio of the diameter (D₁) of the first throttling gap (14) to the diameter (D₂) of the second throttling gap (15), the following applies: 0.40 ≤ D₁ / D₂ ≤ 0.65.

5. Pressure-limiting valve (1) according to one of Claims 1 to 4,
**characterized in that** the two throttling gaps (14, 15) are configured, with regard to their lengths (L₁, L₂), their diameters (D₁, D₂) and their gap widths (S_{d}, S_{w}), such that a hydraulic partial resistance imparted by the second throttling gap (15) is lower than a hydraulic partial resistance imparted by the first throttling gap (14).

6. Pressure-limiting valve (1) according to one of Claims 1 to 5, **characterized in that**, for the two throttling gaps (14, 15), the following condition is satisfied: 0.2 ≤ Δp₂ / Δp₁ ≤ 2.0, wherein in each case, Δp₁ denotes the pressure drop across the first throttling gap (14) and Δp₂ denotes the pressure drop across the second throttling gap (15).

7. Pressure-limiting valve (1) according to one of Claims 1 to 6, **characterized in that** the area ratio (A₁ / A₂) of the first surface (A₁), which can be acted on with pressure, to the second surface (A₂), which can be acted on with pressure, of the valve piston (11) lies in the range 0.2 ≤ A₁ / A₂ ≤ 0.8.

8. Pressure-limiting valve (1) according to one of Claims 1 to 7, **characterized in that** the/each outlet opening (7) is arranged as a radial opening in the housing shell (4) of the valve housing (2), wherein the valve piston (9) at least regionally opens up the/each outlet opening (7) in the direction of the inlet opening (6) in an open position and covers the/each outlet opening (6) in the manner of a slide in a closed position.

9. Pressure-limiting valve (1) according to one of Claims 1 to 8, **characterized in that** the valve seat (8) is formed by a ring-shaped insert part which is fastened on the valve housing (4) and with which the valve body forms the first throttling gap (14).

10. Pressure-limiting valve (1) according to one of Claims 1 to 9, **characterized in that** the valve housing (4) is formed as a hollow screw with an external thread (19) and with a force-application means (20), situated axially opposite the inlet opening (6), for a rotary tool and with an outer circumferential seal (21).

11. Pressure-limiting valve (1) according to one of Claims 1 to 10, **characterized in that** the closing spring (10) is in the form of a helical compression spring which is supported at one end on a shoulder (12) in the valve piston (11) and at the other end on a ball (22) which is fastened in non-positively locking and positively locking fashion in the interior of the housing (2).

12. Pressure-limiting valve (1) according to one of Claims 1 to 11, **characterized by** a leakage passage which is integrated for the purposes of ventilation and/or maintaining a setpoint leakage volume flow and which is formed as an outer bypass line or preferably as a leakage duct (18), which leakage duct in particular has a throttling action and is preferably implemented as a passage bore through the first surface (A₁), which can be acted on with the pressure (p) in an axial direction, of the valve body (9).

## Revendications

1. Soupape de limitation de pression (1), à agencer en particulier dans une conduite de reflux d'un système Common Rail d'un moteur à combustion interne, avec un boîtier de soupape (2), qui présente une tête de boîtier (3) et une enveloppe de boîtier cylindrique creuse (4), dans laquelle il se trouve dans un pied de soupape (5) du boîtier de soupape (2) une ouverture d'entrée axiale (6) et au moins une ouverture de sortie (7) espacée axialement de l'ouverture d'entrée (6), dans laquelle un siège de soupape intérieur (8) pour un corps de soupape (9) se raccorde dans le pied de soupape (5) à l'ouverture d'entrée (6), et dans laquelle un piston de soupape (11) mobile axialement est agencé entre le corps de soupape (9) et un ressort de fermeture (10), qui produit une force de fermeture contre une pression (p) agissant à l'ouverture d'entrée (6), dans laquelle le corps de soupape (9) est réalisé en une seule pièce avec le piston de soupape (11) sous forme de piston étagé, qui présente dans son premier étage (9a), sur son côté tourné vers l'ouverture d'entrée (6), une première surface (A₁) pouvant être soumise en direction axiale à la pression (p) ainsi qu'une longueur axiale (L₁), et qui présente dans son deuxième étage (9b) une deuxième surface (A₂) pouvant être soumise en direction axiale (X-X) à la pression (p), qui forme avec la première surface (A₁) une surface de pression totale (A_{G}), ainsi qu'une deuxième longueur axiale (L₂),
**caractérisée en ce que** le corps de soupape (9) forme sur la première longueur axiale (L₁), dans une position de fermeture, avec sa surface extérieure (9d) une première fente d'étranglement (14) s'étendant en périphérie avec une surface intérieure cylindrique (8b) du siège de soupape (8), dans laquelle une deuxième fente d'étranglement (15) s'étendant en périphérie est formée dans le deuxième étage (9b) sur la deuxième longueur axiale (L₂) entre la surface extérieure (9e) du piston étagé (9) et une surface intérieure (2a) de l'enveloppe de boîtier cylindrique creuse (4), avec une deuxième largeur de fente (S_{w}), qui est plus petite que la largeur de fente (S_{d}) de la première fente d'étranglement (14).

2. Soupape de limitation de pression (1) selon la revendication 1, **caractérisée en ce que**, pour le rapport entre la largeur de fente (S_{d}) de la première fente d'étranglement (14) et la largeur de fente (S_{W}) de la deuxième fente d'étranglement (15), on a: 0, 1 ≤ S_{d}/S_{W} ≤ 2,0.

3. Soupape de limitation de pression (1) selon l'une des revendications 1 à 2, **caractérisée en ce que**, pour le rapport entre la longueur (L₁) de la première fente d'étranglement (14) et la longueur (L₂) de la deuxième fente d'étranglement (15), on a: 0,25 ≤ L₁/L₂ ≤ 2,0.

4. Soupape de limitation de pression (1) selon l'une quelconque des revendications 1 à 3, **caractérisée en ce que**, pour le rapport entre le diamètre (D₁) de la première fente d'étranglement (14) et le diamètre (D₂) de la deuxième fente d'étranglement (15), on a: 0, 40 ≤ D₁/D₂ ≤ 0,65.

5. Soupape de limitation de pression (1) selon l'une quelconque des revendications 1 à 4, **caractérisée en ce que** les deux fentes d'étranglement (14, 15) sont conçues, en ce qui concerne leurs longueurs (L₁, L₂), leurs diamètres (D₁, D₂) et leurs largeurs de fente (S_{d}, S_{W}), de telle manière qu'une résistance partielle hydraulique provoquée par la deuxième fente d'étranglement (15) soit inférieure à une résistance partielle hydraulique provoquée par la première fente d'étranglement (14).

6. Soupape de limitation de pression (1) selon l'une quelconque des revendications 1 à 5, **caractérisée en ce que** la condition 0, 2 ≤ Δp₂/Δp₁ ≤ 2,0 est remplie pour les deux fentes d'étranglement (14, 15), dans laquelle Δp₁ désigne la chute de pression sur la première fente d'étranglement (14) et Δp₂ désigne la chute de pression sur la deuxième fente d'étranglement (15), respectivement.

7. Soupape de limitation de pression (1) selon l'une quelconque des revendications 1 à 6, **caractérisée en ce que** le rapport de surfaces (A₁/A₂) entre la première surface pouvant être exposée à la pression (A₁) et la deuxième surface pouvant être exposée à la pression (A₂) du piston de soupape (11) se situe dans la plage 0,2 ≤ A₁/A₂ ≤ 0,8.

8. Soupape de limitation de pression (1) selon l'une quelconque des revendications 1 à 7, **caractérisée en ce que** la/chaque ouverture de sortie (7) est disposée comme une ouverture radiale dans l'enveloppe de boîtier (4) du boîtier de soupape (2), dans laquelle le piston de soupape (9) libère la/chaque ouverture de sortie (7) dans une position d'ouverture au moins localement en direction de l'ouverture d'entrée (6) et la recouvre à la manière d'un tiroir dans une position de fermeture.

9. Soupape de limitation de pression (1) selon l'une quelconque des revendications 1 à 8, **caractérisée en ce que** le siège de soupape (8) est formé par une pièce rapportée annulaire fixée dans le boîtier de soupape (4), avec laquelle le corps de soupape forme la première fente d'étranglement (14).

10. Soupape de limitation de pression (1) selon l'une quelconque des revendications 1 à 9, **caractérisée en ce que** le boîtier de soupape (4) est réalisé sous la forme d'une vis creuse avec un filet extérieur (19) et un point d'application de force (20) axialement opposé à l'ouverture d'entrée (6) pour un outil tournant ainsi qu'avec un joint d'étanchéité périphérique extérieur (21).

11. Soupape de limitation de pression (1) selon l'une quelconque des revendications 1 à 10, **caractérisée en ce que** le ressort de fermeture (10) est réalisé sous la forme d'un ressort de compression hélicoïdal, qui prend appui par une extrémité sur un épaulement (12) dans le piston de soupape (11) et par l'autre extrémité sur une bille (22) fixée par adhérence et emboîtement à intérieur du boîtier (2).

12. Soupape de limitation de pression (1) selon l'une quelconque des revendications 1 à 11, **caractérisée par** un passage de fuite intégré pour la ventilation et/ou pour le maintien d'un courant volumique de fuite de consigne, qui est réalisé sous la forme d'une conduite de dérivation extérieure ou de préférence sous la forme d'un canal de fuite (18) opérant notamment avec étranglement, qui est réalisé de préférence sous la forme d'un alésage de passage à travers la première surface (A₁) du corps de soupape (9) pouvant être exposée en direction axiale à la pression (p).
